# EUROPÄISCHE PATENTANMELDUNG

(11) **EP 2 048 764 A2**
(43) Veröffentlichungstag der Anmeldung: **15.04.2009**
(21) Anmeldenummer: 08164198.7
(22) Anmeldetag: 12.09.2008
(51) Int. Cl.: H02J 7/00

(54) **Ladestation und Verfahren zum Laden von Akkumulatoren sowie Ladesystem mit einer Ladestation und mit wenigstens einem Akkumulator**

(30) Priorität: 10.10.2007 DE 102007048767; 29.11.2007 DE 102007057552
(71) Anmelder: Gehmeyr, Manfred, 93105 Tegernheim (DE); Held, Heinz, 93047 Regensburg (DE)
(72) Erfinder: Gehmeyr, Manfred, 93105 Tegernheim (DE); Held, Heinz, 93047 Regensburg (DE)
(74) Vertreter: Hannke, Christian

(57) **Zusammenfassung**

Um bekannte Ladestationen für Akkumulatoren weiterzuentwickeln, schlägt die Erfindung eine Ladestation zum Laden von Akkumulatoren, insbesondere von Akkumulatoren handgeführter und elektrisch betriebener Werkzeuge, mit Ladeplätzen, an welchen die zu ladenden Akkumulatoren elektrisch angeschlossen werden können, vor, wobei sich die Ladestation durch Mittel zum Identifizieren eines jeden Akkumulators auszeichnet.

## Beschreibung

Die Erfindung betrifft eine Ladestation zum Laden von Akkumulatoren, insbesondere von Akkumulatoren handgeführter und elektrisch betriebener Werkzeuge, mit Ladeplätzen, an welchen die zu ladenden Akkumulatoren elektrisch angeschlossen werden können. Weiter betrifft die Erfindung ein Ladesystem mit einer Ladestation und mit wenigstens einem Akkumulator, insbesondere mit wenigstens einem Akkumulator handgeführter und elektrisch betriebener Werkzeuge. Darüber hinaus betrifft die Erfindung ein Verfahren zum Laden von Akkumulatoren, insbesondere von Akkumulatoren handgeführter und elektrisch betriebener Werkzeuge, bei welchem die Akkumulatoren an Ladeplätzen elektrisch geladen werden können.

Ladestationen zum Laden von Akkumulatoren sind aus dem Stand der Technik seit langem vielfältig bekannt und haben sich seitdem vielfach bewährt. Sowohl die Ladestationen als auch die hiermit elektrisch aufladbaren Akkumulatoren sind kontinuierlich weiter entwickelt worden, so dass die Leistungshöhe und die Dauer der Leistungsabgabe eines Akkumulators stetig verbessert werden konnte.

Dies ist besonders bei Akkumulatoren von Bedeutung, welche im Zusammenhang mit handgeführten Werkzeugen zum Einsatz kommen, wie etwa Bohrmaschinen, Schleifmaschinen oder Akku-Schrauber, da insbesondere mit Werkzeugen, welche durch Akkumulatoren mit einer Leistungsdauererhöhung betrieben werden, wesentlich unabhängiger gearbeitet werden kann. Hieraus ergibt sich eine unkomplizierte Handhabung eines derartigen Werkzeuges.

Beispielsweise sind Akku-Schrauber bei Montagearbeiten vorteilhaft ohne Drahtverbindung zu einer Stromquelle einsetzbar. Zudem ist ihr Einsatz relativ kostengünstig, da sie mit Akkumulatoren betrieben werden können, die mehrfach wiederaufladbar sind. Aus diesem Grund sind Akku-Schrauber auch häufig in der industriellen Fertigung in einer größeren Anzahl eingesetzt, wobei entsprechende Ladestationen mit einer Mehrzahl an Ladesteckdosen zum Aufladen einer Mehrzahl von Akkumulatoren der im Einsatz befindlichen Akku-Schrauber verwendet werden können.

Es ist Aufgabe der Erfindung insbesondere eine Ladestation für Akkumulatoren bereitzustellen, mittels welchem die Qualität des Ladens von Akkumulatoren weiter verbessert werden kann.

Die Aufgabe der Erfindung wird von einer Ladestation zum Laden von Akkumulatoren, insbesondere von Akkumulatoren handgeführter und elektrisch betriebener Werkzeuge, mit Ladeplätzen, an welchen die zu ladenden Akkumulatoren elektrisch angeschlossen werden können, gelöst, wobei sich die Ladestation durch Mittel zum Identifizieren eines jeden Akkumulators auszeichnet.

Der Begriff "Ladestation" beschreibt jegliche Vorrichtung, welche in geeigneter Weise einen Akkumulator mit elektrischer Energie versorgen und den Akkumulator wieder aufladen kann. Hierbei spielt es keine Rolle, ob es sich bei der Ladestation, um eine stationäre Ladebasis oder um ein mobiles Ladegerät handelt. Eine Ladestation kann mit einem oder mit nahezu beliebig vielen Ladeplätzen ausgestattet sein.

Bei einem "Akkumulator" handelt es sich um jegliche Gebilde, die zur wiederaufladbaren Energiespeicherung geeignet sind. In einem einfachen Fall kann es sich hierbei um eine simple galvanische Zelle handeln, bei welcher chemische Energie in elektrische Energie und während eines Ladevorgangs elektrische Energie in chemische Energie umwandelbar ist.

Vorliegend handelt es sich in erster Linie jedoch um Hochleistungsakkumulatoren, die zuverlässig und dauerhaft ein Höchstmaß an elektrischer Energie zum Betreiben eines mobilen Werkzeuges gleichmäßig liefern müssen. Ein unvorhergesehener Ausfall oder Leistungsabfall kann schnell zu empfindlichen Verzögerungen in einer Fertigung beispielsweise hinsichtlich einer Fertigungslinie führen.

Vorteilhafter Weise gelingt es durch die Identifizierungsmittel, jeden einzelnen Akkumulator eindeutig zu identifizieren, der an der Ladestation aufgeladen werden soll. Hierdurch lassen sich Informationen zu dem Akkumulator gezielt ermitteln, die über den bisher ermittelbaren Informationsgehalt hinausgehen können, wodurch die Gefahr eines solchen plötzlichen Ausfalls stark reduziert wird.

Insbesondere hierdurch unterscheidet sich die vorliegende Ladestation von bekannten Ladestationen, da die bekannten Ladestationen lediglich den Typ eines Akkumulators erkennen können, jedoch jeden einzelnen Akkumulator qualifiziert nicht identifizieren können, wie es vorliegend vorteilhafter Weise der Fall ist.

In diesem Zusammenhang wird die Erfindung auch von einem Verfahren zum Laden von Akkumulatoren, insbesondere von Akkumulatoren handgeführter und elektrisch betriebener Werkzeuge, gelöst, bei welchem die Akkumulatoren an Ladeplätzen elektrisch geladen werden können, und bei welchem die Identität eines zu ladenden Akkumulators ermittelt wird.

Bekannte Ladestationen weisen etwa den Nachteil auf, dass sie keine weitergehenden Informationen von dem zu ladenden Akkumulator erhalten, um einen entsprechend auf den Akkumulator abgestimmten Ladezyklus, beispielsweise im Zusammenhang mit der Anzahl der bereits erfolgten Ladezyklen, zur Verfügung stellen zu können. Es kann hierbei bereits ausreichen, wenn nur mindestens eine zusätzliche Ladeinformation eines Akkumulators vorliegt, welche über die Information einer noch zur Verfügung stehenden Energie am Akkumulator hinaus geht, um einen drohenden Ausfall rechtzeitig erkennen und einen Ausfall eines mit diesem Akkumulator betriebenen Werkzeuges vorbeugen zu können.

Deshalb sieht eine vorteilhafte Verfahrensvariante vor, dass die Anzahl von Ladezyklen eines zu ladenden Akkumulators ermittelt wird. Mittels der Anzahl der Ladezyklen können Rückschlüsse auf eine voraussichtlich noch zu erwartende Lebensdauer des Akkumulators gezogen werden.

Es versteht sich, dass mit den heute zur Verfügung stehenden technologischen Möglichkeiten eine derart genaue Identifizierung eines Akkumulators auf unterschiedlichste Weise erfolgen kann. So könnte ein Akkumulator beim Anschließen an dem Ladeplatz der Ladestation über geeignete Kontakte Informationen an die Ladestation übermitteln. Hierbei ist es aber erforderlich, dass die Kontakte ordnungsgemäß funktionieren und etwa durch Verunreinigungen nicht beeinträchtigt sind.

Besonders vorteilhaft ist es deshalb, wenn eine Identifizierung eines Akkumulators drahtlos erfolgen kann. So kann die Anzahl von Ladezyklen eines zu ladenden Akkumulators vorteilhafter Weise unabhängig von einem elektrischen Ladekontakt des zu ladenden Akkumulators ermittelt werden.

Beispielsweise verfügt die Ladestation über optische Lesemittel, die in der Lage sind, einen auf einem Akkumulator aufgebrachten Barcode zu erkennen. Aber auch andere drahtlose Übertragungstechniken können erfolgreich zum Einsatz kommen. Beispielsweise können gewünschte Informationen auch mittels einer Bluetooth-Technologie übermittelt werden. So ist es vorteilhaft, wenn das Ladegerät Mittel zum drahtlosen Kommunizieren mit dem Akkumulator aufweist.

Da allein schon die Mittel zum drahtlosen Kommunizieren bekannte Ladestationen vorteilhaft weiterentwickeln können, sind die diesbezüglichen Merkmale auch ohne die übrigen Merkmale vorteilhaft.

Eine bevorzugte Ausführungsvariante, welche ebenfalls bestehende Ladestationen ohne die übrigen Merkmale die vorliegende Erfindung weiterentwickeln kann, sieht vor, dass das Ladegerät mit Mitteln zum Erkennen und/oder Auslesen eines Transponders, insbesondere eines RFID-Transponders, eines Akkumulators ausgestattet ist.

Einrichtungen bzw. Geräte zum Erkennen und/oder Auslesen von Transponder sind aus dem Stand der Technik gut bekannt, so diese sehr kostengünstig eingesetzt werden können. Selbst bestehende Ladestationen können problemlos mit derartigen Einrichtungen bzw. Geräten nachträglich ausgestattet werden. Darüber hinaus sind geeignete Transponder, insbesondere RFID-Transponder ebenfalls aus dem Stand der Technik gut bekannt. Deshalb wird auf deren Funktionsweise vorliegend auch nicht weiter eingegangen.

Jedenfalls könnte vorgesehen werden, Informationen beispielsweise auf einen einem Transponder zugehörigen Chip mittels einer geeigneten Einrichtung zu schreiben und zu speichern und bei Bedarf durch die Ladestation beim Einsetzen des Akkumulators in den Ladeplatz der Ladestation vor einem durchzuführenden Ladevorgang auslesen zu lassen.

Bei einer baulich einfach aufgebauten Ladestation könnten die Mittel zum Identifizieren, die Mittel zum drahtlosen Kommunizieren und die Mittel zum Erkennen und/oder Auslesen in einer Baueinheit realisiert sein.

Weitere Verfahrensvarianten können vorsehen, dass die Anzahl von bisher erfolgten Ladezyklen eines zu ladenden Akkumulators und/oder die Anzahl von noch realisierbaren Ladezyklen eines zu ladenden Akkumulators ermittelt werden.

Hierdurch kann an dem jeweiligen Akkumulator besonders betriebssicher festgestellt werden, wann die Wahrscheinlichkeit eines Ausfalls einen kritischen Wert erreicht oder überschreitet. Resultierend aus dem sich hieraus ergebenden Ergebnis kann vorzugsweise die Ladestation automatisch eine Aussortierung des Akkumulators auf Grund seiner begrenzten Haltbarkeit empfehlen.

Um Informationen eines Akkumulators nicht nur beim direkten Auslesen eines RFID-Transponders des Akkumulators an der Ladestation vorliegen haben zu können, ist es vorteilhaft, wenn die Ladestation Mittel zum Speichern von Informationen eines Akkumulators aufweist. Vorliegend ist es bereits ausreichend, wenn die Speichermittel wenigstens Informationen zu der Identität eines Akkumulators speichern. Anhand dieser Informationen kann hinreichend ermittelt werden, wie oft ein Akkumulator bereits an der Ladestation geladen wurde.

Darüber hinaus kann nach erfolgtem Auslesen von Informationen durch eine entsprechende Leseeinrichtung der Ladestation eine Zuordnung der aktuell ausgelesenen Informationen zu weiteren bereits vorhandenen Informationen erfolgen. Gegebenenfalls kann mittels der Speichermittel jedem Ladeplatz eine entsprechende Speichereinrichtung zugeordnet sein. Beispielsweise kann innerhalb der Speichermittel der Ladestation die Anzahl der bereits erfolgten Ladezyklen des jeweiligen Akkumulators gespeichert werden.

Des Weiteren kann eine automatisierte Anzeige von solchen Informationen etwa an der Ladestation erfolgen, insbesondere wenn die maximal zulässige Anzahl an Ladezyklen bei dem jeweiligen Akkumulator bereits erreicht oder überschritten worden ist.

In einer solchen Ausführungsvariante ist es vorteilhaft, wenn die Ladestation Mittel zum Anzeigen von Informationen eines Akkumulators umfasst. Die Anzeige der Informationen kann vorzugsweise visuell, aber auch akustisch erfolgen. Hierdurch kann hinreichend deutlich signalisiert werden, dass der Akkumulator auszutauschen ist, da dessen maximale Haltbarkeitsgrenze kurz bevorsteht, bereits erreicht worden ist, oder eine zuverlässige Funktionsweise dieses Akkumulators durch einen neuen Ladezyklus nicht mehr sichergestellt werden kann.

Weiter kann an der Ladestation eine Steuereinrichtung zum automatischen Auswählen eines optimalen Ladevorgangs in Abhängigkeit von einer Anzahl bisher erfolgter Ladezyklen vorgesehen sein. Dies hat den Vorteil, dass ein Akkumulator entsprechend seiner Gebrauchsdauer immer optimal geladen werden kann, was die Lebensdauer des Akkumulators weiter erhöhen kann.

Sofern durch die Steuereinrichtung festgestellt wird, dass noch nicht eine maximal zulässige Anzahl an Ladezyklen bei dem jeweiligen Akkumulator erreicht worden ist, kann eine Bedienperson, beispielsweise mittels einer Anzeige an der Ladestation, dazu aufgefordert werden, anzugeben, welche Art von Ladevorgang erwünscht ist.

Derartige Ladevorgangsarten können beispielsweise ein schneller, ein mittlerer, ein langsamer und/oder auch ein gepulster Ladevorgang sein, um den Akkumulator, der beispielsweise ein Lithium-Ionen-Akkumulator oder ein Nickel-Cadmium-Akkumulator darstellt, unterschiedlich schnell, jedoch auch mit unterschiedlicher Qualität, laden zu können.

Zusätzlich kann bei jedem dieser Ladevorgangsarten mittels der Steuereinrichtung geprüft werden, ob eine gegebenenfalls manuell gewählte Ladevorgangsart grundsätzlich bei dem Akkumulator mit einer zuvor eingelesenen spezifischen Identifikationsnummer möglich ist, ohne dass der Akkumulator durch die manuell gewählte Ladevorgangsart Schaden erleidet oder für die für ihn vorgesehene Betriebsart keine zuverlässige Funktionsweise sicherstellen würde.

Sofern eine derartige Prüfung zu einem positiven Ergebnis kommen würde, könnte dem Akkumulator die entsprechende Stromzufuhr mit einer gewünschten Stromstärke und/oder mit einer gewünschten Spannung zugeleitet werden. Sofern diese Prüfung jedoch zu einem negativen Ergebnis kommen würde, kann beispielsweise eine Anzeige in der Ladestation erfolgen, welche der Bedienperson mitteilt, dass diese Art von Ladevorgang nicht möglich ist und die Bedienperson eine andere Art von Ladevorgang auswählen möge. Wenn überhaupt keiner der Ladevorgänge mit einer dieser spezifischen Art möglich ist, kann eine Anzeige mit der Aufforderung stattfinden, dass die Bedienperson den Akkumulator aussortieren soll.

Sofern ein Ladevorgang dennoch durchgeführt werden soll, kann die Bedienperson aufgefordert werden, die Stromzufuhr mit einer gewünschten Stromstärke und/oder Spannung manuell freizuschalten.

Zusätzlich kann angezeigt werden, dass noch eine bestimmte Anzahl an Ladevorgängen möglich ist, welches beispielsweise anhand zuvor gespeicherter Ladezyklenanzahlinformationen etwa mittels einer Statistikauswertung ermittelt werden kann.

Neben den vorstehend beschriebenen Aufgaben kann die Steuereinrichtung oder eine weitere Steuereinrichtung im Bedarfsfall auf weitere Funktionen der Ladestation Einfluss nehmen. Beispielsweise kann die Steuereinheit erkannte bzw. ausgelesene Informationen eines Akkumulators bereits in der Ladestation gespeicherten Informationen zuordnen. Oder eine Steuereinrichtung steuert das automatisierte Auslesen der auf einem Chip eines RFID-Transponders gespeicherten Information, sobald der jeweilige Akkumulator in die Ladestation eingesteckt oder in deren Nähe gebracht worden ist.

Es versteht sich, dass eine derartige Steuereinrichtung sowohl unmittelbar in der Ladestation integriert als auch extern bereit gestellt sein kann. Auch kann die Steuereinrichtung als Hardware oder als Software vorliegen, wobei letzteres den Vorteil einer sehr einfachen Update-Funktion umfassen kann.

Idealerweise können mittels der vorliegenden Steuereinrichtung die an einer Ladestation vorhandenen bzw. die hier erläuterten weiteren Mittel und Einrichtungen gesteuert bzw. geregelt werden.

Eine entsprechend geeignete Steuereinrichtung könnte auch sonstige mit der Ladestation in Kontakt stehenden externen Einrichtungen steuern. Hierzu ist es vorteilhaft, wenn die Ladestation eine Drahtlos-Schnittstelle zu einem Netzwerk, wie einem LAN oder eines WLAN, aufweisen würde. Es versteht sich das ein solcher Kontakt auch mittels einer Kabelverbindung herstellbar ist.

Insbesondere wenn mehrere Ladestationen dezentral im Einsatz sind, ist es vorteilhaft, wenn die Ladestationen Mittel zum Zuordnen eines Akkumulators zu einer Ursprungsladestation aufweisen. Hierdurch kann sichergestellt werden, dass die eingesetzten Akkumulatoren immer wieder ihren ursprünglichen vorgesehenen Einsatzbereichen zugeordnet werden können, auch wenn einzelne Akkumulatoren durch bereichsübergreifende Arbeiten kurzzeitig aus ihrem Ursprungseinsatzbereich entfernt wurden.

Damit die Ladestation beispielsweise einem Transponder eines Akkumulators Daten übermitteln kann, die gegebenenfalls auf dem Transponder des Akkumulators gespeichert werden sollen, ist es vorteilhaft, wenn die Ladestation einen Emitter zum Senden von Daten zu dem Akkumulator umfasst. Die auf dem Akkumulatortransponder gespeicherten Daten können bei einem weiteren Ladevorgang mit entsprechend an der Ladestation gespeicherten Informationen verglichen und verifiziert werden.

Auch wird die Aufgabe der Erfindung von einem Ladesystem mit einer Ladestation und mit wenigstens einem Akkumulator, insbesondere mit wenigstens einem Akkumulator handgeführter und elektrisch betriebener Werkzeuge, gelöst, bei welchem die Ladestation erste Mittel zum drahtlosen Kommunizieren mit einem Akkumulator und der Akkumulator zweite Mittel zum drahtlosen Kommunizieren mit der Ladestation aufweist. Besonders betriebssicher kann das Ladesystem arbeiten, wenn es eine Ladestation nach einem der vorhergehend erläuterten Merkmale und einen Akkumulator mit einem Transponder, insbesondere mit einem RFID-Transponder, umfasst.

Weitere Vorteile, Ziele und Eigenschaften vorliegender Erfindung werden anhand nachfolgender Beschreibung anliegender Zeichnung erläutert, in welcher beispielhaft eine Ladestation zum Laden von Akkumulatoren dargestellt ist.

Es zeigt:
- Figur 1: schematisch eine perspektivische Ansicht einer Ladestation mit vier Ladeplätzen für Akkumulatoren;
- Figur 2: schematisch eine Seitenansicht der Ladestation;
- Figur 3: schematisch eine Vorderansicht der Ladestation; und
- Figur 4: schematisch einen Längsschnitt der Ladestation entlang der Schnittlinie A-A aus der Figur 3.

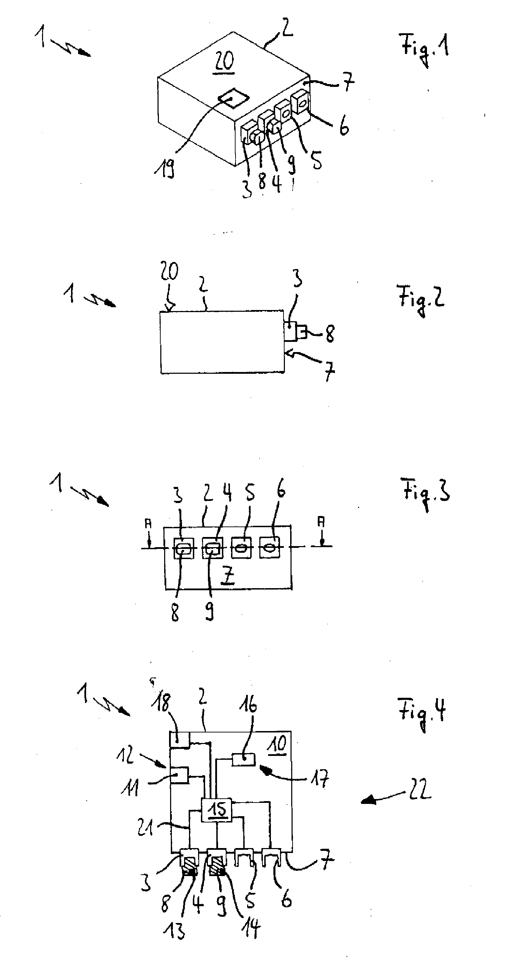

Die in den Figuren 1 bis 4 gezeigte Ladestation 1 weist ein Gehäuse 2 auf und verfügt insgesamt über vier Ladeplätze 3, 4, 5 und 6, die an der Vorderseite 7 der Ladestation 1 angeordnet sind. In dem ersten Ladeplatz 3 ist ein erster zu ladender Akkumulator 8 und in dem zweiten Ladeplatz 4 ist ein weiterer zu ladender Akkumulator 9 eingesteckt, um nach einem Ladezyklus wieder einsatzbereit zu sein, so dass beide Akkumulatoren 8 und 9 wieder ein elektrisch betriebenes Werkzeug (hier nicht gezeigt) antreiben können. Die beiden Akkumulatoren 8 und 9 werden im Zusammenhang mit einem Akku-Schrauber eingesetzt. Die beiden übrigen Ladeplätze 5 und 6 sind zurzeit unbesetzt.

In der schematisch geschnittenen Darstellung der Ladestation 1 aus der Figur 4 erkennt man im Inneren 10 der Ladestation 1 Mittel 11 zum Identifizieren der beiden Akkumulatoren 8 und 9. Die Mittel 11 zum Identifizieren sind in diesem Ausführungsbeispiel als ein Ladestation-Transponder 12 ausgebildet, der in der Lage ist, drahtlos jeweils mit einem RFID-Transponder 13 des ersten Akkumulators 8 und mit einem weiteren RFID-Transponder 14 des weiteren Akkumulators 9 zu kommunizieren. Insbesondere können mittels des Ladestation-Transponders 12 Identifikationsmerkmale der beiden Akkumulatoren 8 und 9 ausgelesen und empfangen werden und gleichzeitig beispielsweise spezifische Daten der Ladestation 1 an die jeweiligen RFID-Transponder 13 und 14 übermittelt werden. Hierdurch können die Akkumulatoren 8 und 9 eindeutig von der Ladestation 1 identifiziert werden und idealerweise zugleich Informationen zu einer Ladehistorie der Akkumulatoren 8 und 9 an eine Steuereinrichtung 15 der Ladestation 1 übertragen werden. Aber auch Informationen über die momentane Qualität der Akkumulatoren 8 und 9 können erkannt und entsprechend verarbeitet werden.
Der Ladestation-Transponder 12 stellt vorliegend somit nicht nur Mittel zum Identifizieren der Akkumulatoren sondern auch Mittel zum drahtlosen Kommunizieren mit den zu ladenden Akkumulatoren 8 und 9 sowie Mittel zum Erkennen und/oder Auslesen der RFI D-Transponder 13 und 14 der Akkumulatoren dar.

Die Steuereinrichtung 15 kann anhand der von den RFID-Transpondern 13 und 14 empfangenen Informationen die Art des Ladevorgangs der Akkumulatoren 8 bzw. 9 individuell einstellen.

Es kann auch ebenso durch die Steuereinrichtung 15 automatisiert festgestellt werden, ob die Akkumulatoren 8 und 9 etwa eine Mindestgrenze für den Ladezustand aufweisen, der für die Funktionsweise erforderlich ist.

Ebenso ist es möglich, dass die Steuereinrichtung 15 durch Erkennen der ausgelesenen Identifikationsnummer automatisiert die jeweils passenden Stromstärken und Spannungen für diese Art von Akkumulator 8 oder 9, also beispielsweise eine Spannung von 12 Volt oder 16 Volt, auswählt und dem Ladevorgang zuordnet.

Um die Ladehistorie der Akkumulatoren 8 und 9 in der Ladestation 1 nicht nur temporär mittels der Steuereinrichtung 15 zwischenspeichern sondern darüber hinaus auch dauerhaft in der Ladestation 1 speichern zu können, verfügt die Ladestation 1 über geeignete Mittel 16 zum Speichern der Informationen.

In diesem Ausführungsbeispiel sind die Mittel 16 zum Speichern als RAM-Speicher 17 ausgeführt, so dass darin gespeicherte Informationen auch wieder gelöscht werden können, beispielsweise wenn ein bisher eingesetzter Akkumulator 8 bzw. 9 vollständig ersetzt wird.

Um die ermittelten Informationen auch außerhalb der Ladestation 1 verwenden und auswerten zu können, ist die Ladestation 1 zusätzlich noch mit einer Drahtlos-Schnittstelle 18 zu einem hier nicht näher gezeigten Netzwerk ausgerüstet. Dies ist besonders bei dezentral angeordneten Ladestationen vorteilhaft.

Wichtige Informationen, beispielsweise zu dem Ladezustand eines Akkumulators 8 bzw. 9, können auch unmittelbar an der Ladestation 1 angezeigt werden. Hierzu umfasst das Ladegerät 1 geeignete Anzeigemittel 19 an der Gehäuseoberseite 20 (siehe Figur 1) der Ladestation 1.

Beispielsweise kann die Steuereinrichtung 15 mittels der Anzeigemittel 19 auf der Ladestation anzeigen lassen, dass der Akkumulator 8 oder 9 noch zu 80 % aufgeladen ist und insofern keine erneute Ladung erforderlich ist.

Bei der Ladestation 1 sind alle gezeigten elektrischen Bauteile mittels einer Drahtverbindung 21, hier nur zwischen dem ersten Ladeplatz 3 und der Steuereinrichtung 15 beziffert, untereinander elektrisch verbunden. In einer anderen Ausführungsvariante könnte auch eine drahtlose Verbindung gewählt werden.

Die mit dem Ladestation-Transponder 12 ausgestattete Ladestation 1 und die mit den RFID-Transpondern 13, 14 ausgestatteten Akkumulatoren 8 und 9 bilden gemeinsam ein Ladesystem 22, mittels welchem die Ladequalität von Akkumulatoren 8 und 9 weiter verbessert werden kann, da durch den beschriebenen Informationsaustausch, insbesondere durch die genaue Identifizierung des zu ladenden Akkumulators 8 bzw. 9, Ladezyklen wesentlich besser gesteuert werden können, wodurch die Akkumulatoren 8 und 9 individuell wieder geladen werden können. Der Ladestation-Transponder 12 bildet hierbei erste Mittel zum drahtlosen Kommunizieren des Ladesystems 22 und die RFID-Transponder 13 und 14 bilden zweite Mittel zum drahtlosen Kommunizieren des Ladesystems 22.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Ladestation
- 2: Gehäuse
- 3: erster Ladeplatz
- 4: zweiter Ladeplatz
- 5: dritter Ladeplatz
- 6: vierter Ladeplatz
- 7: Vorderseite
- 8: erster zu ladender Akkumulator
- 9: weiterer zu ladender Akkumulator
- 10: Innere der Ladestation 1
- 11: Mittel zum Identifizieren
- 12: Ladestation-Transponder
- 13: erster RFID-Transponder
- 14: weiterer RFID-Transponder
- 15: Steuereinrichtung
- 16: Mittel zum Speichern
- 17: RAM-Speicher
- 18: Drahtlos-Schnittstelle
- 19: Anzeigemittel
- 20: Gehäuseoberseite
- 21: Drahtverbindung
- 22: Ladesystem

## Patentansprüche

1. Ladestation (1) zum Laden von Akkumulatoren (8, 9), insbesondere von Akkumulatoren (8, 9) handgeführter und elektrisch betriebener Werkzeuge, mit Ladeplätzen (3, 4, 5, 6), an welchen die zu ladenden Akkumulatoren (8, 9) elektrisch angeschlossen werden können,
**gekennzeichnet durch**
Mittel (11) zum Identifizieren eines jeden Akkumulators (8, 9).

2. Ladestation (1) nach Anspruch 1,
**gekennzeichnet durch**
Mittel zum drahtlosen Kommunizieren mit einem Akkumulator (8, 9).

3. Ladestation (1) nach Anspruch 1 oder 2,
**gekennzeichnet durch**
Mittel zum Erkennen und/oder Auslesen eines Transponders, insbesondere eines RFID-Transponders (13, 14), eines Akkumulators (8, 9).

4. Ladestation (1) nach Anspruch 1 bis 3,
**gekennzeichnet durch**
Mittel zum Speichern (16) von Informationen eines Akkumulators (8, 9).

5. Ladestation (1) nach einem der Ansprüche 1 bis 4,
**gekennzeichnet durch**
Mittel (19) zum Anzeigen von Informationen eines Akkumulators (8, 9).

6. Ladestation (1) nach einem der Ansprüche 1 bis 5,
**gekennzeichnet durch**
eine Steuereinrichtung (15) zum automatischen Auswählen eines optimalen Ladevorgangs eines Akkumulators (8, 9) in Abhängigkeit von einer Anzahl bisher erfolgter Ladezyklen.

7. Ladestation nach einem der Ansprüche 1 bis 6,
**gekennzeichnet durch**
eine Drahtlos-Schnittstelle (18) zu einem Netzwerk, wie einem LAN oder eines WLAN und/oder eine Schnittstelle zum Anschluss mindestens einer drahtgebundenen Verbindung zu dem Netzwerk.

8. Ladesystem (22) mit einer Ladestation (1) und mit wenigstens einem Akkumulator (8, 9), insbesondere mit wenigstens einem Akkumulator (8, 9) handgeführter und elektrisch betriebener Werkzeuge,
**dadurch gekennzeichnet, dass**
die Ladestation (1) erste Mittel zum drahtlosen Kommunizieren mit einem Akkumulator (8, 9) und der Akkumulator (8, 9) weitere Mittel zum drahtlosen Kommunizieren mit der Ladestation (1) aufweist.

9. Verfahren zum Laden von Akkumulatoren (8, 9), insbesondere von Akkumulatoren (8, 9) handgeführter und elektrisch betriebener Werkzeuge, bei welchem die Akkumulatoren (8, 9) an Ladeplätzen (3, 4, 5, 6) elektrisch geladen werden können,
**dadurch gekennzeichnet, dass**
die Identität eines zu ladenden Akkumulators (8, 9) ermittelt wird.

10. Verfahren nach Anspruch 9,
**dadurch gekennzeichnet, dass**
die Anzahl von Ladezyklen eines Akkumulators (8, 9) ermittelt wird.

11. Verfahren nach Anspruch 9 oder 10,
**dadurch gekennzeichnet, dass**
die Anzahl von Ladezyklen eines Akkumulators (8, 9) unabhängig von einem elektrischen Ladekontakt des Akkumulators (8, 9) ermittelt wird.

12. Verfahren nach einem der Ansprüche 9 bis 11,
**dadurch gekennzeichnet,dass**
die Anzahl von bisher erfolgten Ladezyklen eines Akkumulators (8, 9) und/oder die Anzahl von noch realisierbaren Ladezyklen eines Akkumulators (8, 9) ermittelt werden.
